**Europäisches Patentamt**

**European Patent Office**

**Office européen des brevets**

(19)

(11) Veröffentlichungsnummer: **0 338 356**

**A1**

(12) **EUROPÄISCHE PATENTANMELDUNG**

(21) Anmeldenummer: **89106246.5**

(22) Anmeldetag: **08.04.89**

(51) Int. Cl.4: **C25D 21/12 , G01N 27/48**

(30) Priorität: **18.04.88 DE 3813429**

(43) Veröffentlichungstag der Anmeldung:
**25.10.89 Patentblatt 89/43**

(84) Benannte Vertragsstaaten:
**BE CH DE ES FR GB IT LI LU NL SE**

(71) Anmelder: **SCHERING AKTIENGESELLSCHAFT Berlin und Bergkamen**
**Müllerstrasse 170/178 Postfach 65 03 11**
**D-1000 Berlin 65(DE)**

(72) Erfinder: **Meyer, Heinrich, Dr. Dr.**
**Bismarckstrasse 8b**
**D-1000 Berlin 12(DE)**
Erfinder: **Plieth, Waldfried Johannes Ludwig, Prof. Dr.**
**Orelzeile 11**
**D-1000 Berlin 20(DE)**
Erfinder: **Kurpjoweit, Martin**
**Willdenowstrasse 13**
**D-1000 Berlin 65(DE)**

(54) **Chronoamperometrische und chronopotentiometrische Messungen zur Kontrolle und Steuerung von galvanischen Kupferabscheidungen.**

(57) Die Erfindung betrifft ein Verfahren zur Kontrolle und/oder Steuerung galvanischer Kupferabscheidungen aus sauren Kupferbädern durch chronoamperometrische oder chronopotentiometrische Messungen, dadurch gekennzeichnet, daß a) der Strom-Zeit-Verlauf bei Einschaltung eines vorgegebenen Potentials oder b) das Potential bei Einstellung einer vorgegebenen Stromdichte gemessen und eventuelle Abweichungen vom Sollwert durch Änderung der Prozessparameter ausgeglichen werden.

EP 0 338 356 A1

# CHRONOAMPEROMETRISCHE UND CHRONOPOTENTIOMETRISCHE MESSUNGEN ZUR KONTROLLE UND STEUERUNG VON GALVANISCHEN KUPFERABSCHEIDUNGEN

Die Erfindung betrifft ein Verfahren zur Kontrolle und/oder Steuerung galvanischer Kupferabscheidungen aus sauren Kupferbädern durch chronoamperometrische oder chronopotentiometrische Messungen.

Die bekannten Verfahren zur Kontrolle beziehungsweise Steuerung galvanischer Kupferabscheidungen beschränken sich vorwiegend auf qualitativ analytische oder zyklisch voltammetrische Messungen. Diese Methoden erlauben nur eine sehr indirekte Beurteilung der Badqualitäten sowie der Eigenschaften der Metallisierungsschicht. Bei den analytischen Verfahren kann nicht garantiert werden, daß die analytisch bestimmte Konzentration der Konzentration der tatsächlich aktiven Substanz entspricht. Die etwas direktere Methode der zyklischen Voltametrie, bei der vor allem die Charakteristika der Wiederauflösung einer geringfügigen Abscheidungsmenge auf einer inerten Elektrode untersucht werden, ist nicht nur wenig charakteristisch, sondern auch anfällig gegen geringfügige Verunreinigungen, die die Qualität der Metallschicht noch nicht dramatisch beeinflussen.

Aufgabe der vorliegenden Erfindung ist die Schaffung eines Verfahrens und einer Vorrichtung, welche eine Vorhersage und Überwachung der Metalleigenschaften galvanischer Kupferabscheidungen ermöglichen.

Diese Aufgabe wird erfindungsgemäß durch eine Verfahren gemäß dem kennzeichnenden Teil des Patentanspruchs gelöst.

Vorteilhafte Ausführungsformen des Verfahrens sind in den Unteransprüchen gekennzeichnet.

Gegenstand der Erfindung ist weiterhin eine Vorrichtung zur Durchführung des erfindungsgemäßen Verfahrens.

Das erfindungsgemäße Verfahren macht in überraschender Weise den Einfluß von Additiven und anderen Badparametern auf die Kinetik des ablaufenden Prozesses sichtbar. Hierdurch wird die Festlegung eines Arbeitsbereichs innerhalb der elektrochemischen Meßwerte für das galvanische Kupferbad ermöglicht. Eine Eichung auf bekannte Badzusammensetzungen gewährleistet außerdem die Korrektheit der Ergebnisse.

Das erfindungsgemäße Verfahren durch chronoamperometrische oder chronopotentiometrische Messungen läßt zum Beispiel direkt erkennen, ob eine gleichmäßige Abscheidung abläuft oder ein grobkristalliner Niederschlag zu erwarten ist, was für die Erzeugung glänzender Kupferüberzüge mit gleichmäßig verteilten kleinen Kristallinen von außerordentlicher Bedeutung ist.

Das Meßprinzip besteht darin, daß die Meßelektrode, bevorzugt aus Inertmaterial, für kurze Zeit auf ein festes Potential gesetzt und der resultierende Strom gemessen wird oder daß eine feste Stromdichte eingestellt und das auftretende Potential gemessen wird.

Die Messungen erfolgen, indem das Bad in die Zelle überführt und temperiert wird. Ist die Versuchszeit klein gegen die Durchflußgeschwindigkeit, kann die Probenzufuhr auch kontinuierlich erfolgen.

Am Funktionsgenerator werden Höhe (Potential / Stromstärke) und Dauer des Pulses eingestellt und auf den Potentiostaten beziehungsweise Galvanostaten gegeben. Dieser stellt die entsprechenden Werte in der elektrochemischen Zelle ein und mißt die resultierenden Größen (Strom / Potential).

Die Auswertung erfolgt durch Speicherung über einer Zeitbasis (Speicheroszilloskop oder Wandelkarten mit Uhr) und anschließende Aufzeichung auf einem XY-Schreiber oder Bildschirm.

Das erfindungsgemäße Verfahren ist auf die üblichen sauren Kupferbäder anwendbar. Im allgemeinen wird ein wäßriges Bad folgender Zusammensetzung benutzt:

| Kupfersulfat ($CuSO_4$ . $5H_2O$) | 50 -250 g/Liter |
| --- | --- |
| vorzugsweise | 60 - 80 g/Liter |
| Schwefelsäure | 50 - 250 g/Liter |
| vorzugsweise | 180 - 220 g/Liter |
| Natriumchlorid | 0.03 - 0,25 g/Liter |
| vorzugsweise | 0.03 - 0.1 g/Liter |

Anstelle von Kupfersulfat können auch andere Kupfersalze enthalten sein. Auch Schwefelsäure ist durch Fluorborsäure, Phposphorsäure oder andere Säuren ganz oder teilweise ersetzbar. Das Bad kann auch chloridfrei sein und die üblichen Additive, wie organische Thio- oder Aminoverbindungen, Polyalkohole etc., enthalten.

2

Die folgenden Figuren dienen zur Erläuterung der Erfindung.

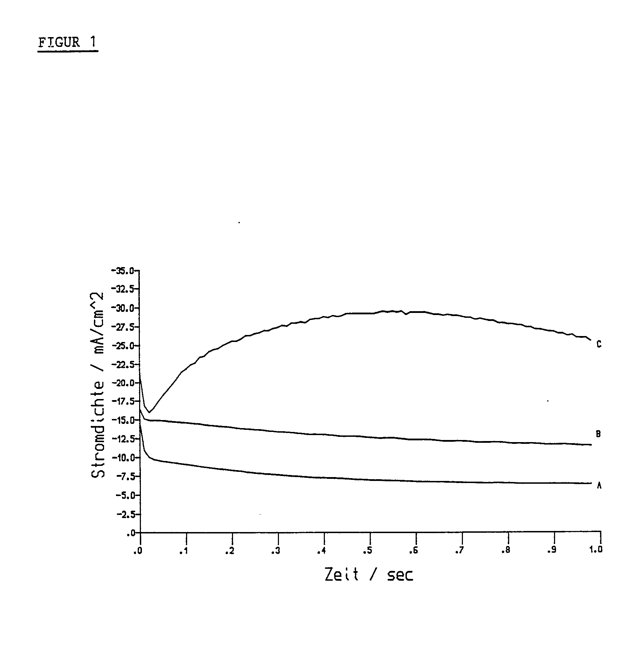

Figur 1 zeigt erfindungsgemäß erhaltende Strom-Zeit-Kurven von drei sauren Kupferbädern gleicher Konzentrationen an Netzmittel mit starker (a), normaler (b) und ungenügender (c) Inhibiton.

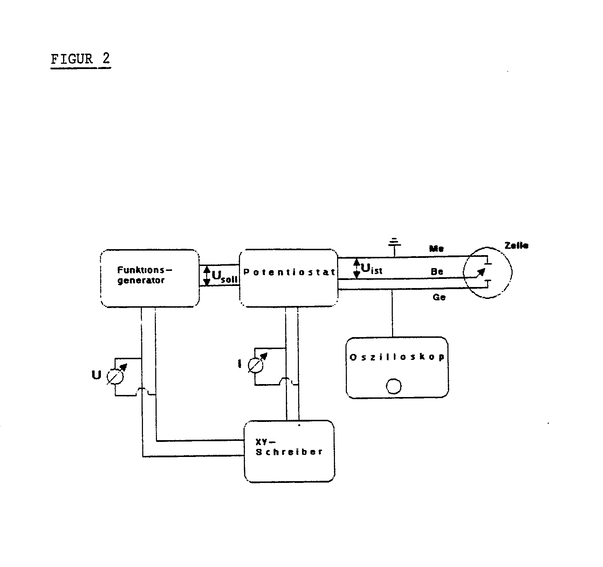

Figur 2 zeigt den Aufbau der erfindungsgemäßen Vorrichtung bestehend aus Meß-, Bezugs- und Gegenelektrode in Drei-Elektrodenanordnung. Dabei kann sowohl eine stationäre, als auch eine rotierende Scheibenelektrode aus verschiedenen Materialien, zum Beispiel Au, Pt, Ag,Cu, Glassy Carbon, Pd etc. verwendet werden.

Ferner werden eine Elektrolysezelle, ein Funktionsgenerator und ein Potentiostat beziehungsweise Galvanostat benötigt. Die Auswertung kann analog (Speicheroszilloskop: XY-Schreiber) oder digital (Computer: A/D-, D/A-Wandler) erfolgen.

**Ansprüche**

1. Verfahren zur Kontrolle und/oder Steuerung galvanischer Kupferabscheidungen aus sauren Kupferbädern durch chronoamperometrische oder chronopontentiometrische Messungen, dadurch gekennzeichnet, daß a) der Strom-Zeit-Verlauf bei Einschaltung eines vorgegebenen Potentials oder b) das Potential bei Einstellung einer vorgegebenen Stromdichte gemessen und eventuelle Abweichungen vom Sollwert durch Änderung der Prozessparameter ausgeglichen werden.

2. Verfahren gemäß Anspruch 1, dadurch gekennzeichnet, daß Gleichstrom- oder Wechselstrom-Messungen durchgeführt werden.

3. Verfahren gemäß Anspruch 1, worin der Prozessparameter die Temperatur darstellt.

4. Verfahren gemäß Anspruch 1, worin der Prozessparameter die Zusammensetzung der verwendeten Produkte darstellt.

5. Verfahren gemäß Anspruch 1, worin der Prozessparameter die Konzentration der verwendeten Produkte darstellt.

6. Verfahren gemäß Anspruch 1, worin der Prozessparameter die Konvektion der flüssigen Prozessprodukte darstellt.

7. Verfahren gemäß Anspruch 1, dadurch gekennzeichnet, daß die Messung mittels eines Funktionsgenerators durch Einstellung von Höhe (Potential / Stromstärke) und Dauer des Pulses erfolgt, die auf den Potentiostaten oder Galvanostaten gegeben werden, der die entsprechenden Werte in der elektrochemischen Zelle einstellt und gleichzeitig die hieraus resultierenden Strom/Potentialwerte mißt, worauf die Auswertung durch Speicherung über einer Zeitbasis, insbesondere einem Speicheroszilloskop, und anschließende Aufzeichnung auf einen XY-Schreiber oder Bildschirm erfolgt.

8. Verfahren gemäß Anspruch 1, dadurch gekennzeichnet, daß es mit der Methode der Strom/Potential-Registrierung in cyclischer Weise, insbesondere der cyclischen Voltametrie, gekoppelt wird.

9. Vorrichtung zur Durchführung des Verfahrens gemäß Ansprüchen 1 bis 8.

10. Vorrichtung gemäß Anspruch 9, bestehend aus einer Elektrolysezelle, einem Funktionsgenerator oder Galvanostat, einer Messelektrode, einer Bezugselektrode und einer Gegenelektrode in Form einer Drei-Elektrodenanordnung für die Messung und einem analog- oder digitalarbeitenden Auswertungsgerät.

11. Vorrichtung gemäß Anspruch 10, worin die Gegenelektrode eine stationäre oder eine rotierende Scheibenelektrode darstellt.

12. Vorrichtung gemäß Anspruch 10, worin das Auswertungsgerät als Speicheroszillograph oder XY-Schreiber mit analoger Auswertung oder Computer mit digitaler Auswertung gestaltet ist.

FIGUR 1

FIGUR 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PLATING AND SURFACE FINISHING, Band 69, Nr. 1, Januar 1982, Seiten 73-75, Winterpark, Florida, US; M.S.E. ABDO et al.: "Using current response graphs to predict cathode deposit quality in rectified square-wave electrolysis" * Seite 73, linke Spalte, Figuren 1,2; Seite 75, linke Spalte, "Summary" * --- | 1,5 | C 25 D 21/12 G 01 N 27/48 |
| X | EP-A-0 154 705 (SCHERING AG) * Ansprüche 1,2; Figuren 2,6 * --- | 1,5-12 | |
| X | EP-A-0 151 926 (IBM) * Ansprüche 1-5; Seite 7, Zeilen 9-23 * ----- | 1,2,5-8 | |
| | | | **RECHERCHIERTE SACHGEBIETE (Int. Cl.4)**<br><br>G 01 N<br>C 25 D |

Der vorliegende Recherchenbericht wurde für alle Patentansprüche erstellt

| Recherchenort | Abschlußdatum der Recherche | Prüfer |
|---|---|---|
| DEN HAAG | 20-07-1989 | DE ANNA P.L. |